# EUROPÄISCHE PATENTSCHRIFT

(11) **EP 2 054 644 B1**
(45) Veröffentlichungstag und Bekanntmachung des Hinweises auf die Patenterteilung: **13.10.2010**
(21) Anmeldenummer: 08749537.0
(22) Anmeldetag: 10.04.2008
(51) Int. Cl.: F16H 59/02

(54) **SCHALTHEBELKOPF**
SHIFT LEVER HEAD
TETE DE LEVIER DE VITESSES

(30) Priorität: 11.05.2007 DE 102007022086
(43) Veröffentlichungstag der Anmeldung: 06.05.2009
(73) Patentinhaber: Continental Automotive GmbH, 30165 Hannover (DE)
(72) Erfinder: HOSTMANN, Daniel, 93059 Regensburg (DE); NGUYEN THIEN, Nhu, 93057 Regensburg (DE)
(86) Internationale Anmeldenummer: PCT/EP2008/054372
(87) Internationale Veröffentlichungsnummer: WO 2008/138695

(56) Entgegenhaltungen:
- EP-A- 1 400 426
- WO-A-02/28067
- WO-A-2007/076830
- WO-A-2007/121977
- DE-A1- 10 025 357
- DE-A1- 10 348 221
- DE-A1-102006 038 465
- US-A1- 2004 229 726

## Beschreibung

Die Erfindung bezieht sich auf einen Schalthebelkopf, der mit seinem ersten Endbereich an einem freien Ende eines Schalthebels zur Betätigung eines Getriebes eines Kraftfahrzeugs befestigt ist.

Damit aus der Position des auf dem Fahrersitz sitzenden Fahrers heraus der Schalthebelkopf für den Fahrer leicht erreichbar und bedienbar ist, sind Schalthebel und Schalthebelkopf an entsprechender Position im Kraftfahrzeug angeordnet. Damit kann der Fahrer den Schalthebel betätigen, ohne seine Sitzposition zu verändern.

Zur Betätigung von Eingabeeinheiten ist es für den Fahrer meist erforderlich, sich nach vorn zu beugen und seine normale Fahrposition zu verlassen, was zu einer erhöhten Ablenkung vom Straßenverkehr führt.

Aus der für Artikel 54(3) EPÜ relevanten WO 2007/121977 A ist ein Schalthebelkopf der eingangs genannten Art bekannt, wobei in dem Schalthebelkopf eine zu dem dem ersten Endbereich entgegengesetzten Endbereich hin offene Aufnahme ausgebildet ist, in der eine Eingabeeinheit mit Näherungssensoren und einem Touchpad angeordnet ist. Die Eingabefläche der Eingabeeinheit ist dabei eine Fortsetzung der umgebenden Oberfläche des Schalthebelkopfes.

Aus der für Artikel 54(3) EPÜ relevanten WO 2007/076830 A ist ein Schalthebelkopf der eingangs genannten Art bekannt, wobei in dem Schalthebelkopf eine zu dem dem ersten Endbereich entgegengesetzten Endbereich hin offene Aufnahme ausgebildet ist, in der ein Betätigungsplättchen einer Eingabeeinheit angeordnet ist. Das Betätigungsplättchen der Eingabeeinheit ist dabei eine Fortsetzung der umgebenden Oberfläche des Schalthebelkopfes.

Aus der DE-A-100 25 357 ist ein Schalthebelkopf gemäß dem Oberbegriff des unabhängigen Anspruchs 1 bekannt.

Aus der EP-A-1 400 426 ist ein Fahrschalter für ein Schienenfahrzeug mit einem eine Antriebssteuerung aufweisenden Handgriff bekannt, der ein oder mehrere Schalter aufweist, die in Ausnehmungen des Handgriffs gegenüber der Oberfläche des Handgriffs vertieft angeordnet sind.

Aufgabe der Erfindung ist eine aus der normalen Fahrposition für den Fahrer leicht erreichbare, für menügesteuerte Einrichtungen geeignete Informationseingabemöglichkeiten zu schaffen.

Diese Aufgabe wird erfindungsgemäß dadurch gelöst, dass in dem Schalthebelkopf eine zu dem dem ersten Endbereich entgegengesetzten zweiten Endbereich hin offene Aufnahme ausgebildet ist, in der eine Eingabeeinheit mit einer berührungssensitiven und/oder näherungssensitiven Eingabefläche angeordnet ist, wobei die berührungssensitive und/oder näherungssensitive Eingabefläche von der Mündung der Aufnahme um einen Abstand tieferliegend in der Aufnahme angeordnet ist, wobei an der Mündung der Aufnahme ein Haltering befestigt ist, der die berührungssensitive und/oder näherungssensitive Eingabefläche umschließt und auf dem umlaufenden Rand der Eingabeeinheit diese in ihrer Einbauposition haltend in Auflage ist und wobei der Haltering an der dem zweiten Endbereich abgewandten Seite axial hervorsteht, so dass ein Abstand zwischen der Eingabefläche und der stirnseitigen Außenfläche des Halterings vorhanden ist.

Durch diese Ausbildung kann der Schalthebelkopf in Doppelfunktion zur Betätigung des Getriebes als auch zu einer Informationseingabe genutzt werden, wobei der Fahrer immer in seiner optimalen Fahrposition bleiben kann und das Auffinden der Eingabefläche keine besondere Aufmerksamkeit des Fahrers erfordert.

Die Anordnung der Eingabefläche im zweiten Endbereich führt dazu, dass dieser Bereich bei einer Getriebeschaltung von der Handfläche des Fahrers schützend abgedeckt wird, so dass dabei keine unbeabsichtigte Betätigung der Eingabefläche erfolgt und die beiden Betätigungsarten am Schalthebelkopf auch nicht miteinander kollidieren.

Die Verwendung einer berührungssensitiven und/oder näherungssensitive Eingabeeinheit ermöglicht eine Informationseingabe mit einem nur geringen Platzerfordernis.

Um die Sicherheit gegen eine Fehlbetätigung der Eingabefläche bei einer Getriebeschaltung noch zu erhöhen, ist die berührungssensitive und/oder näherungssensitive Eingabefläche von der Mündung der Aufnahme um einen Abstand tieferliegend in der Aufnahme angeordnet sein.

Der Haltering dient zur Sicherung der Eingabeeinheit in der Aufnahme, wobei der Haltering in Doppelfunktion den Abstand zwischen der Eingabefläche und der stirnseitigen Außenfläche des Halterings herstellt. In einer weiteren Funktion kann der Haltering einen Leuchtring bilden.

Vorzugsweise ist die Eingabeeinheit ein Touchpad.

Neben der Funktion der Informationseingabe kann die berührungssensitive und/oder näherungssensitive Eingebefläche gleichzeitig eine Anzeigefläche bilden.

Um eine Bedienung der Eingabeeinheit bei Dunkelheit zu erleichtern, kann die berührungssensitive und/oder näherungssensitive Eingabefläche oder die Mündung der Aufnahme von einem Leuchtring umschlossen sein.

Um weitere Bedienanwendungen zu ermöglichen, können an dem Schalthebelkopf und/oder an dem Schalthebel weitere Bedienelemente angeordnet sein.

Diese können z. B. für eine Betätigungsfunktion zur Aktivierung des Bedienungsstarts oder zu einer Umschaltung zwischen verschiedenen Betriebmodi wie z.B. Handschrifterkennung oder Mausfunktion verwendet werden.

Eine Möglichkeit der Anordnung eines Bedienelements besteht darin, dass die berührungssensitive und/oder näherungssensitive Eingabefläche oder die Mündung der Aufnahme von einem ein Bedienteil bildenden Druckring umschlossen ist.

In einer anderen, ebenfalls vorteilhaften Ausbildung können an dem Schalthebelkopf axial und/oder radial Tasten angeordnet sein, die Bedienelemente bilden.

Es können aber auch an dem Schalthebel radial Tasten angeordnet sein, die Bedienelemente bilden.

Ausführungsbeispiele der Erfindung sind in der Zeichnung dargestellt und werden im Folgenden näher beschrieben. Es zeigen
- Figur 1: einen Halbquerschnitt eines ersten Ausführungsbei- spiels eines Schalthebelkopfes entlang der Linie II - II in Figur 2,
- Figur 2: eine Draufsicht des Schalthebelkopfes nach Figur 1,
- Figur 3: eine Draufsicht eines zweiten Ausführungsbeispiels eines Schalthebelkopfes.

Die in den Figuren dargestellten Schalthebelköpfe 4, 4' weisen einen ersten Endbereich 1 auf, an dem koaxial eine Ausnehmung 2 zur Aufnahme und Befestigung eines nicht dargestellten Schalthebels ausgebildet ist.

An dem dem ersten Endbereich 1 entgegengesetzten zweiten Endbereich 3 der Schalthebelköpfe 4, 4' ist ebenfalls koaxial eine topfartige Aufnahme 5 ausgebildet, die zum zweiten Endbereich 3 hin offen ist und nach außen mündet.

Die Aufnahme 5 ist stufig ausgebildet und weist an ihrem äußren Rand am Übergang von der der Mündung näheren Stufe größeren Querschnitts zur Stufe geringeren Querschnitts eine umlaufende Schulter 6 auf.

Mittig steht von dem Boden 7 der Aufnahme 5 ein Abstützdom 8 hervor, der sich bis in die Ebene der Schulter 6 erstreckt.

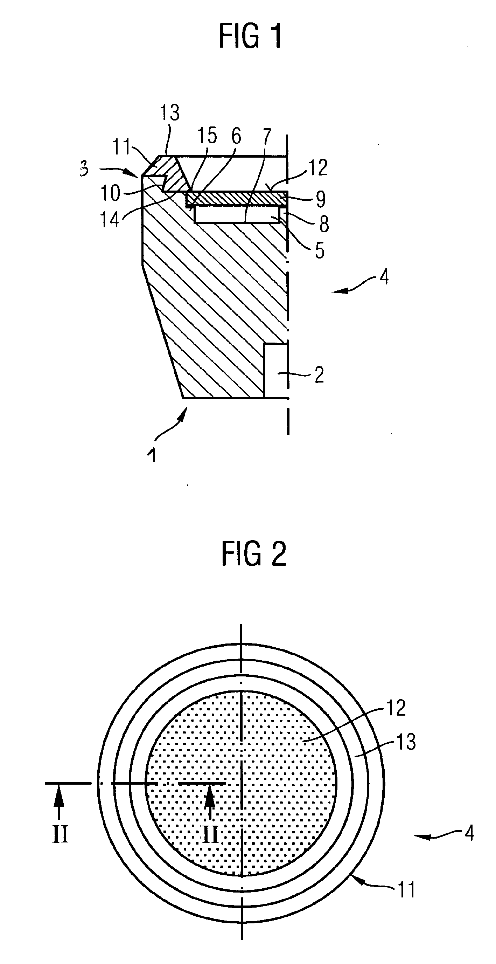

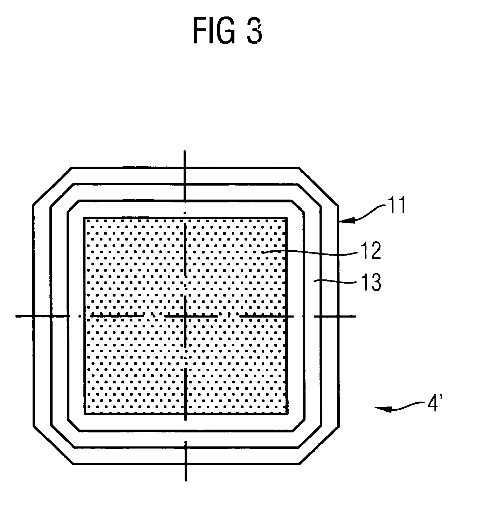

Der Querschnitt des Schalthebelkopfes 4 sowie der Aufnahme 5 in den Figuren 1 und 2 ist kreisrund, während dieser Querschnitt bei dem Schalthebelkopf 4' der Figur 3 quadratisch ist, wobei die Ecken des Schalthebelkopfes 4' angefast sind.

Es versteht sich, dass Schalthebelkopf und/oder Aufnahme auch jeden anderen Querschnitt aufweisen können.

Auf der Schulter 6 und dem Abstützdom 8 liegt eine berührungssensitive Eingabeeinheit 9 auf, deren Höhe der axialen Länge der Stufe größeren Querschnitts der Aufnahme 5 entspricht und die einen diesen Querschnitt entsprechenden Querschnitt besitzt. Die nach außen gerichtete Fläche der Eingabeeinheit 9 ist eine berührungssensitive Eingabefläche 12, die gleichzeitig eine Anzeigefläche bildet.

An dem Bereich der Mündung der Aufnahme 5 ist eine radial umlaufende Nut 10 halbem Schwalbenschwanzquerschnitts ausgebildet, in die das entsprechend ausgebildete Ende eines Halterings 11 eingreift, der an der dem zweiten Endbereich 3 abgewandten Seite axial hervorsteht, so dass ein Abstand zwischen der Eingabefläche 12 und der stirnseitigen Außenfläche 13 des Halterings 11 vorhanden ist.

Seine stirnseitige Innenfläche 14 ragt radial nach innen über den umlaufenden Rand 15 der Eingabeeinheit 9 hinaus und liegt axial auf dem Rand 15 auf, so dass die Eingabeeinheit 9 in ihrer dargestellten Einbauposition gehalten wird.

Der Schalthebel mit dem Schalthebelkopf 4, 4' ist vorzugsweise im Bereich einer Mittelkonsole zwischen Fahrersitz und Beifahrersitz im Kraftfahrzeug angeordnet. Es versteht sich aber, dass eine Anordnung an anderer geeigneter Stelle auch möglich ist.

## Patentansprüche

1. Schalthebelkopf, der mit seinem ersten Endbereich (1) an einem freien Ende eines Schalthebels zur Betätigung eines Getriebes eines Kraftfahrzeugs befestigbar ist, wobei in dem Schalthebelkopf (4, 4') eine zu dem dem ersten Endbereich (1) entgegengesetzten zweiten Endbereich (3) hin offene Aufnahme (5) ausgebildet ist, in der eine Eingabeeinheit (9) mit einer berührungssensitiven und/oder näherungssensitiven Eingabefläche (12) angeordnet ist, **dadurch gekennzeichnet, dass** die berührungssensitive und/oder näherungssensitive Eingabefläche (12) von der Mündung der Aufnahme (5) um einen Abstand tieferliegend in der Aufnahme (5) angeordnet ist, wobei an der Mündung der Aufnahme (5) ein Haltering (11) befestigt ist, der die berührungssensitive und/oder näherungssensitive Eingabefläche (12) umschließt und auf dem umlaufenden Rand (15) der Eingabeeinheit (9) diese in ihrer Einbauposition haltend in Auflage ist und wobei der Haltering (11) an der dem zweiten Endbereich (3) abgewandten Seite axial hervorsteht, so dass ein Abstand zwischen der Eingabefläche (12) und der stirnseitigen Außenfläche (13) des Halterings (11) vorhanden ist.

2. Schalthebelkopf nach einem der vorhergehenden Ansprüche, **dadurch gekennzeichnet , dass** die Eingabeeinheit ein Touchpad ist.

3. Schalthebelkopf nach einem der vorhergehenden Ansprüche, **dadurch gekennzeichnet , dass** die berührungssensitive und/oder näherungssensitive Eingabefläche (12) eine Anzeigefläche bildet.

4. Schalthebelkopf nach einem der vorhergehenden Ansprüche, **dadurch gekennzeichnet , dass** die berührungssensitive und/oder näherungssensitive Eingabefläche oder die Mündung der Aufnahme von einem Leuchtring umschlossen ist.

5. Schalthebelkopf nach Anspruch 4, **dadurch gekennzeichnet, dass** der Haltering den Leuchtring bildet.

6. Schalthebelkopf nach einem der vorhergehenden Ansprüche, **dadurch gekennzeichnet , dass** an dem Schalthebelkopf und/oder dem Schalthebel weitere Bedienelemente angeordnet sind.

7. Schalthebelkopf nach Anspruch 6, **dadurch gekennzeichnet, dass** die berührungssensitive und/oder näherungssensitive Eingabefläche oder die Mündung der Aufnahme von einem ein Bedienelement bildenden Schaltring umschlossen ist.

8. Schalthebelkopf nach Anspruch 6, **dadurch gekennzeichnet, dass** an dem Schalthebelkopf axial und/oder radial Tasten angeordnet sind, die Bedienelemente bilden.

9. Schalthebelkopf nach Anspruch 6, **dadurch gekennzeichnet, dass** an dem Schalthebel radial Tasten angeordnet sind, die Bedienelemente bilden.

## Claims

1. Shift lever head which can be attached by its first end region (1) to a free end of a shift lever in order to activate a transmission of a motor vehicle, a receptacle (5) which is open toward the second end region (3) opposite the first end region (1) being formed in the shift lever head (4, 4'), in which receptacle (5) an input unit (9) with a touch-sensitive and/or proximity-sensitive input surface (12) is arranged, **characterized in that** the touch-sensitive and/or proximity-sensitive input surface (12) is arranged in the receptacle (5), lying lower by a distance from the mouth of the receptacle (5), a securing ring (11) being attached to the mouth of the receptacle (5), which securing ring (11) surrounds the touch-sensitive and/or proximity-sensitive input surface (12) and rests on the circumferential edge (15) of the input unit (9) in such a way as to secure it in its installation position, and the securing ring (11) protruding axially on the side facing away from the second end region (3), with the result that a distance is present between the input surface (12) and the end-side outer surface (13) of the securing ring (11).

2. Shift lever head according to the preceding claim, **characterized in that** the input unit is a touchpad.

3. Shift lever head according to one of the preceding claims, **characterized in that** the touch-sensitive and/or proximity-sensitive input surface (12) is a display surface.

4. Shift lever head according to one of the preceding claims, **characterized in that** the touch-sensitive and/or proximity-sensitive input surface or the mouth of the receptacle is surrounded by an illuminated ring.

5. Shift lever head according to Claim 4, **characterized in that** the securing ring forms the illuminated ring.

6. Shift lever head according to one of the preceding claims, **characterized in that** further operator control elements are arranged on the shift lever head and/or the shift lever.

7. Shift lever head according to Claim 6, **characterized in that** the touch-sensitive and/or proximity-sensitive input surface or the mouth of the receptacle is surrounded by a switching ring which forms an operator control element.

8. Shift lever head according to Claim 6, **characterized in that** keys, which form operator control elements, are arranged axially and/or radially on the shift lever head.

9. Shift lever head according to Claim 6, **characterized in that** keys, which form operator control elements, are arranged radially on the shift lever.

## Revendications

1. Tête de levier de changement de vitesse, laquelle, pour régler la boîte de vitesse d'un véhicule automobile, peut, dans sa première zone terminale (1), être fixée à une extrémité libre d'un levier de changement de vitesse, un logement (5) ouvert dans la direction de la deuxième zone terminale (3) opposée à la première zone terminale (1) étant ménagé dans la tête de levier de changement de vitesse (4, 4'), logement dans lequel est placée une unité de saisie (9) comportant une surface de saisie (12) sensible au toucher et / ou sensible à la proximité, **caractérisée par le fait que** la surface de saisie (12) sensible au toucher et/ou sensible à la proximité est placée à une certaine distance de l'embouchure du logement (5) et est logée plus profondément dans le logement (5), où une bague de retenue (11) est fixée à l'embouchure du logement (5) et entoure la surface de saisie (12) sensible au toucher et/ou sensible à la proximité en s'appliquant sur le bord périphérique (15) de l'unité de saisie (9) où elle la maintient dans sa position de montage et où la bague de retenue (11) dépasse dans le sens axial sur le côté opposé à la deuxième zone terminale (3), si bien qu'il existe un écartement entre la surface de saisie (12) et la surface extérieure (13) du côté frontal de la bague de retenue (11).

2. Tête de levier de changement de vitesse selon l'une des revendications précédentes, **caractérisée par le fait que** l'unité de saisie est un pavé tactile.

3. Tête de levier de changement de vitesse selon l'une des revendications précédentes, **caractérisée par le fait que** la surface de saisie (12) sensible au toucher et /ou sensible à la proximité est une surface d'affichage.

4. Tête de levier de changement de vitesse selon l'une des revendications précédentes, **caractérisée par le fait que** la surface de saisie sensible au toucher et / ou sensible à la proximité ou l'embouchure du logement sont entourées d'une bague lumineuse.

5. Tête de levier de changement de vitesse selon la revendication 4, **caractérisée par le fait que** la bague de retenue constitue la bague lumineuse.

6. Tête de levier de changement de vitesse selon l'une des revendications précédentes, **caractérisée par le fait que** d'autres organes de commande sont placés sur la tête de levier de changement de vitesse et/ou sur le levier de changement de vitesse.

7. Tête de levier de changement de vitesse selon la revendication 6, **caractérisée par le fait que** la surface de saisie sensible au toucher et/ou sensible à la proximité ou l'embouchure du logement sont entourées par une bague de commande servant d'organe de réglage.

8. Tête de levier de changement de vitesse selon la revendication 6, **caractérisée par le fait que** des touches servant d'organes de réglage sont disposées dans le sens axial et/ou dans le sens radial sur la tête de levier de changement de vitesse.

9. Tête de levier de changement de vitesse selon la revendication 6, **caractérisée par le fait que** des touches servant d'organes de réglage sont disposées dans le sens radial sur le levier de changement de vitesse.
